# FASCICULE DE BREVET EUROPEEN

(11) **EP 1 015 266 B1**
(45) Date de publication et mention de la délivrance du brevet: **16.04.2003**
(21) Numéro de dépôt: 98946507.5
(22) Date de dépôt: 23.09.1998
(51) Int. Cl.: B60G 21/04, B60G 21/06, B60G 21/10

(54) **SYSTEME DE SUSPENSION POUR VEHICULE ROULANT A ESSIEUX INTERACTIFS**
AUFHÄNGUNGSSYSTEME FÜR FAHRZEUGE MIT INTERAKTIVEN ACHSEN
SUSPENSION SYSTEM FOR WHEELED VEHICLE WITH INTERACTIVE AXLES

(30) Priorité: 24.09.1997 FR 9712089
(43) Date de publication de la demande: 05.07.2000
(73) Titulaire: Ailef, 38950 Saint Martin le Vinoux (FR)
(72) Inventeur: FAVIER, Lionel, F-38240 Meylan (FR); RIGOLET, Daniel, F-38360 Saint Laurent du Pont (FR)
(74) Mandataire: Hecké, Gérard
(86) Numéro de dépôt international: FR9802049
(87) Numéro de publication internationale: WO99015352

(56) Documents cités:
- EP-A- 0 374 030
- WO-A-95/11813
- DE-C- 964 747
- FR-A- 897 325
- FR-A- 1 030 729
- FR-A- 1 055 080
- FR-A- 1 213 238
- FR-A- 2 034 087
- US-A- 3 917 306
- US-A- 4 964 480

## Description

### Domaine technique de l'invention

L'invention est relative à un véhicule comportant :
- un châssis rigide associé à au moins un essieu avant et un essieu arrière, chaque essieu étant équipé d'au moins deux roues disposées symétriquement par rapport à l'axe longitudinal du châssis, et chaque roue possédant un degré de liberté vertical par rapport au châssis,
- une première liaison entre les roues d'un même essieu pour imposer aux roues dudit essieu des mouvements verticaux de pompage identiques par rapport au châssis,
ou de mêmes amplitudes mais de sens opposés, ou des mouvements verticaux résultant de la combinaison des deux types de mouvements précédents,
- une deuxième liaison rigide entre l'essieu avant et l'essieu arrière coopérant avec la première liaison pour dériver du mouvement de rotation par rapport au châssis de l'un des essieux, un mouvement de rotation en sens inverse de l'autre essieu, ladite deuxième liaison étant agencée pour s'opposer au mouvement de roulis du châssis en situation de virage,
- et des premiers moyens pour ajuster la répartition entre les essieux avant et arrière du transfert de charge transversal dû à l'accélération transversale.

Dans les véhicules connus, les moyens de suspension, notamment des ressorts mécaniques ou pneumatiques, permettent un degré de liberté entre les roues et le châssis, c'est à dire entre la masse suspendue et la masse non suspendue. Le châssis possède un degré de liberté vertical lui permettant d'effectuer des mouvements de pompage et de tangage, et un degré de liberté en rotation autorisant des mouvements de roulis correspondants à des basculements vers la droite ou vers la gauche. Les centres de roulis avant et arrière sont généralement situés près du sol, et sous le centre de gravité de la masse suspendue. Une trajectoire en virage engendre pour un véhicule classique un mouvement de roulis dû à l'écrasement des ressorts d'un même côté, et l'étirement des autres ressorts du côté opposé. L'angle de roulis pris par le châssis influence le comportement routier du véhicule, notamment les conditions de travail des pneumatiques qui assurent le contact roues / sol.

### Etat de la technique antérieure

Diverses solutions ont déjà été proposées pour limiter les mouvements de roulis dans le but d'améliorer les qualités routières d'une automobile.

L'une de ces solutions consiste à ajouter aux éléments élastiques de suspension d'au moins un essieu, une liaison élastique transversale dont la raideur se combine avec celle des éléments de suspension lorsque ceux-ci ne sont pas également sollicités, c'est à dire qui permettent de dissocier les raideurs de pompage et celles de roulis. Mais pour être efficace ce système doit lui-même posséder une raideur importante, qui ajoutée au caractère hyperstatique des contacts roues / sol, peut provoquer une altération du confort et de substantielles pertes d'adhérence.

D'autres systèmes, plus complexes, basés sur des phénomènes d'interaction entre les roues, ont été imaginés afin de mieux contrôler les mouvements de roulis, mais ceux-ci n'apportent pas d'avantages décisifs.

Le document EP 374 030 décrit une suspension mécanique ayant un ressort à lames transversal au niveau de chaque essieu, et une timonerie d'interconnexion entre deux berceaux articulés avant et arrière. Les liaisons entre les roues d'un même essieu ne sont pas rigides. Un tel dispositif ne permet pas de supprimer totalement le mouvement de roulis en virage, et est incapable de conserver une assiette statique transversale parallèle au sol.

Le document US 4964480 se rapporte à un véhicule tout-terrain, dans lequel les mouvements de pompage des deux essieux ne sont pas indépendants dans une des réalisations. Dans une variante, le système est équipé d'une suspension sur chacun des essieux, mais est dépourvu de liaison rigide entre les essieux.

Selon le document DE 964747, un dispositif selon un premier mode de réalisation ne peut pas avoir des mouvements de pompage pur. Selon un deuxième mode de réalisation, les dispositifs sont dotés de suspensions, mais il n'y a pas des liaisons rigides.

Un autre type de solution propose des suspensions dites "actives" qui ne font pas appel à des éléments élastiques, et dans lesquelles l'altitude de chacune des roues est contrôlée par un vérin hydraulique commandé par une centrale de puissance gérée par un calculateur en fonction de nombreux paramètres. Mais i s'agit de systèmes très complexes et très onéreux.

### Objet de l'invention

L'objet de l'invention consiste à réaliser un système de suspension pour véhicule permettant de contrôler le mouvement de roulis, tout en conservant des raideurs de pompage convenables, et la possibilité de répartir le transfert de charge entre les essieux avant et arrière.

Le véhicule selon l'invention est caractérisé en que
- la première liaison est rigide entre les roues de chaque essieu,
- la deuxième liaison rigide entre l'essieu avant et l'essieu arrière est hydraulique, et comprend deux canalisations en liaison avec des vérins associés aux roues des deux essieux de manière à déplacer les roues situées d'un même côté selon des mouvements de sens opposés, tandis que les roues disposées en diagonale possèdent des mouvements de sens identiques par rapport au châssis,
- chaque essieu comprenant de plus des deuxièmes moyens pour autoriser un premier mouvement vertical de pompage, et un deuxième mouvement différentiel permettant la répartition des transferts de charge latéraux en virage entre les deux essieux.

Une telle combinaison permet d'obtenir les avantages suivants :
a) répartition quasi-isostatique des forces verticales de contact roues/sol;
b) absence totale de mouvement de roulis en virage;
c) maintien de l'assiette transversale;
d) répartition ajustable des transferts de charge transversaux en virage;
e) indépendance totale entre les mouvements de pompage avant et arrière, et entre les mouvements de pompage et les mouvements de roulis;
f) adaptabilité à toutes les cinématiques des liaisons roues-châssis des véhicules à suspension conventionnelle.

Ce système dynamique ne fait pas appel à un calculateur, ni à une source d'énergie extérieure.

Selon un mode de réalisation, les deuxièmes moyens sont formés dans chaque essieu par un élément basculeur ayant deux degrés de liberté par rapport au châssis, et coopèrant avec une paire de vérins hydrauliques alignés dans le sens transversal de chaque essieu, les vérins avant et arrière situés d'un même côté du véhicule étant interconnectés au moyen de l'une des canalisations hydrauliques permettant une variation différentielle des volumes pistonnables. Les volumes pistonnables des vérins de chaque essieu communiquent avec les canalisations par des clapets se trouvant soit dans un état ouvert lors du fonctionnement normal du système de suspension , soit dans un état fermé en cas de perte de contact avec le sol d'au moins une roue du train correspondant.

Selon une variante de réalisation, notamment utilisable pour une voiture de tourisme, les deuxièmes moyens de chaque essieu comportent dispositif hydraulique de suspension ayant deux vérins hydrauliques, un élément viscoélastique, et un boîtier de distribution associé aux deux canalisations hydrauliques d'interconnexion avec l'autre essieu, l'ensemble étant agencé pour conserver la répartition isostatique des réactions sur les roues. Chaque vérin hydraulique comprend un double piston mobile délimitant trois chambres distinctes à l'intérieur d'un cylindre fixe, l'une des chambres du vérin étant connectée à la chambre correspondante de l'autre vérin par une première tubulure, tandis que les deux autres chambres du vérin sont reliées en inverse aux chambres de l'autre vérin par des deuxième et troisième tubulures. Les tubulures sont interconnectées avec le boîtier de distribution pour que d'une part la chambre du vérin avant gauche soit reliée de plus à la chambre du vérin arrière gauche , et à la chambre du vérin arrière droit par des canalisations, et que d'autre part la chambre du vérin avant gauche soit branchée de plus à la chambre du vérin arrière gauche , et à la chambre du vérin arrière droit.

### Description sommaire des figures

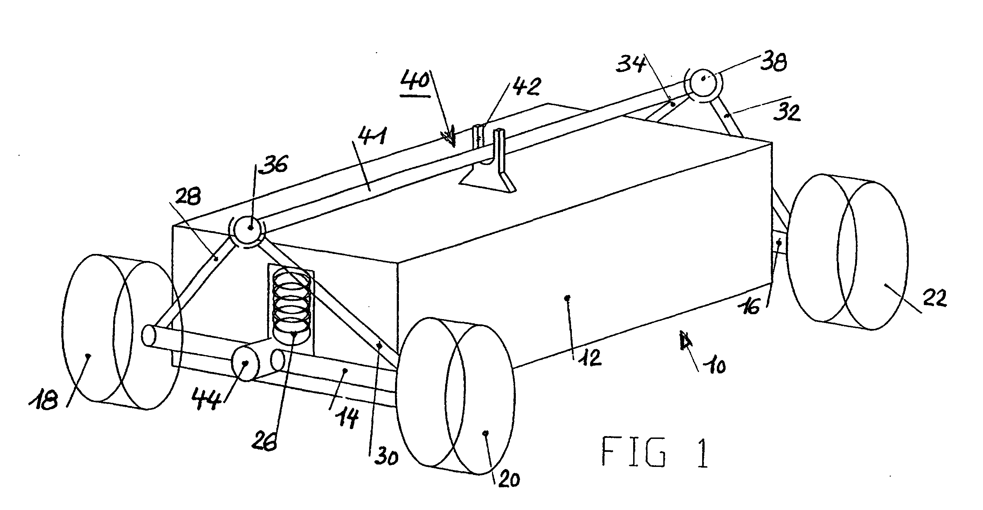

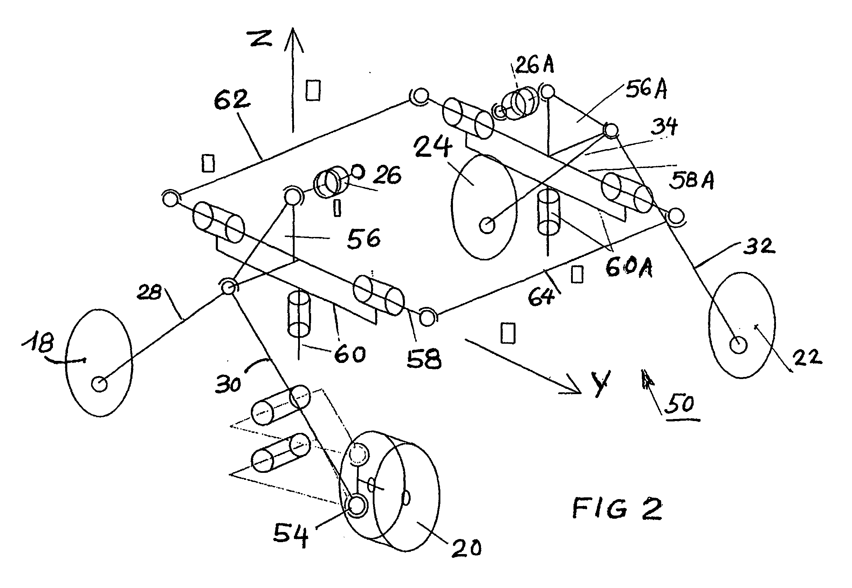

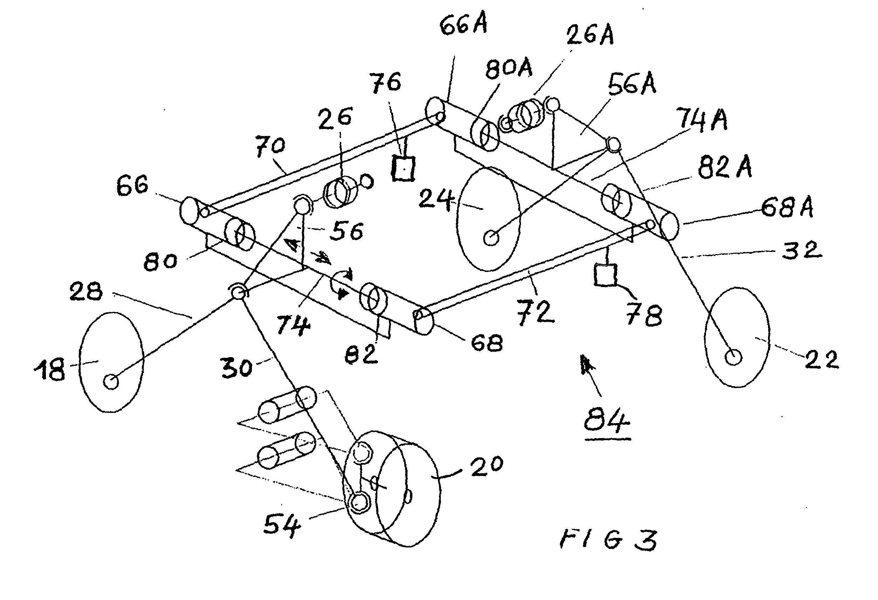

D'autres avantages et caractéristiques ressortiront plus clairement de la description qui va suivre de différents modes de réalisation de l'invention (figures 3 à 7) ou des exemples utiles à la compréhension de l'invention (figures 1 et 2), donnés à titre d'exemples non limitatifs et représentés aux dessins annexés, dans lesquels :
- la figure 1 est une vue schématique en perspective d'un véhicule équipé d'un système de suspensïon qui n'est pas conforme à l'invention;
- la figure 2 représente une vue schématique en perspective d'un système de suspension qui n'est pas conforme à l'invention appliqué à une voiture de compétition;
- la figure 3 montre une vue identique de la figure 2 d'un premier mode de réalisation;
- la figure 4 montre une vue en coupe à échelle agrandie de l'ensemble basculeur et vérins de l'essieu avant de la figure 3;
- la figure 5 représente une vue identique de la figure 4 d'une variante de réalisation;
- la figure 6 montre une vue schématique du circuit hydraulique selon l'invention, appliqué à chaque essieu d'une voiture de tourisme ;
- la figure 7 représente une autre variante de réalisation de l'invention, présentant un contrôle supplémentaire des mouvements de tangage.

En référence à la figure 1, un véhicule 10 à quatre roues comporte un châssis 12 rigide relié à deux essieux 14, 16 transversaux disposés à la partie avant et à la partie arrière du véhicule.

Chaque essieu 14, 16 est équipé d'une paire de roues 18, 20 ; 22, 24 et coopère avec un élément viscoélastique 26 de suspension, et deux bielles 28, 30 ; 32, 34 de commande. L'élément viscoélastique 26 est agencé dans la zone centrale entre l'essieu 14 avant et la masse suspendue du châssis 12. La roue 24 arrière droit n'est pas représentée sur la figure 1, ni l'élément viscoélastique associé à l'essieu arrière 16.

Les bielles 28, 30 ; 32, 34 de chaque essieu 14, 16 sont liées aux roues 18, 20; 22, 24 en formant une première liaison rigide, et s'étendent en oblique selon des côtés adjacents d'un triangle pour coopérer au sommet avec des moyens de liaison 40 constituant une deuxième liaison pour l'interconnexion des essieux 14, 16. Les moyens de liaison 40 peuvent être mécaniques et comportent à titre d'exemple une barre de couplage 41 longitudinale guidée dans la partie médiane par une glissière 42 en U ajustable dans la direction longitudinale, et comprenant aux extrémités opposées une paire de rotules 36, 38 en contact avec les bielles de commande 28, 30 ; 32, 34.

L'élément viscoélastique 26 est taré pour définir la raideur globale des roues 18, 20 du train avant. Lors d'une phase d'amortissement correspondant à un effet de pompage simple de la masse suspendue du châssis 12, les roues 18, 20 de l'essieu avant 14 ont des mouvements équivalents contrôlés par l'élément viscoélastique 26. Ce mouvement de pompage du châssis 12 n'influence pas l'autre essieu arrière 16. Il en résulte que des mouvements simultanés de pompage des deux essieux 14, 16, ou des mouvements de tangage peuvent s'exercer sans interaction réciproque.

En cas d'un soulèvement de la roue 18 du train avant provoquant la rotation de l'essieu 14 autour de l'axe de pivotement 44 dans le sens des aiguilles d'une montre, les deux roues 18, 20 ont des mouvements de même amplitude par rapport au châssis 12, mais de sens opposés. Les deux bielles 28, 30 de commande agissent par l'intermédiaire de la barre de couplage 41 sur les deux bielles 32, 34 du train arrière, de manière à entraîner l'autre essieu 16 en rotation inverse des aiguilles d'une montre. Les roues 20, 22 ; 18, 24 situées d'un même côté se déplacent avec des mouvements de sens opposés, tandis que les roues situées en diagonale ont des mouvements de sens identiques par rapport au châssis 12.

La répartition des réactions verticales du sol équilibrant le poids du véhicule reste la même, indépendamment de l'état de la route. Le châssis 12 conserve une assiette statique parallèle au sol, même en cas do répartition inégale des masses suspendues par rapport à l'axe longitudinal du véhicule 10.

Le système de suspension de la figure 1 est agencé pour annuler totalement le mouvement de roulis du châssis 12 en situation de virage. Le véhicule 10 ne prend pas d'angle de roulis en virage, et le transfert de charge latéral de la masse suspendue provoqué par l'accélération transversale en virage, est réparti automatiquement entre les roues avant 18, 20 et arrière 22, 24 en fonction de la position longitudinale de la glissière 42 dans laquelle coulisse le levier de couplage 41. Un contact isostatique est engendré entre l'ensemble des quatre roues 18, 20, 22, 24 et le sol, suite à la répartition homogène des réactions verticales qui s'opposent au poids du véhicule 10.

Sur la figure 2, le véhicule 50 illustré schématiquement est une monoplace de compétition. Les mêmes numéros de repères désignent des pièces identiques ou similaires à celles de la figure 1. Chaque bielle de commande, par exemple la bielle 30 du train avant est articulée à la roue 20 au moyen d'une rotule 54, et à l'opposé à un premier élément basculeur 56 ayant deux degrés de liberté en rotation par rapport au châssis. L'élément basculeur 56 est monté à rotation sur un premier axe horizontal 58 (flèche Y), et un deuxième axe vertical 60 (flèche Z). Le mouvement de rotation de l'élément basculeur 56 autour du premier axe 58 autorise un mouvement vertical de pompage pur du châssis, lequel est contrôlé par un premier élément viscoélastique 26 de suspension. La rotation autour du deuxième axe vertical 60 permet un mouvement vertical différentiel, lequel agit sur l'essieu arrière par l'intermédiaire d'une paire de bielles d'actionnement 62, 64. Les deux bielles 32, 34 de commande de l'essieu arrière sont accouplées à un deuxième élément basculeur 56A, lequel possède une structure identique à celle du premier élément basculeur 56, en étant monté à rotation sur un troisième axe horizontal 58A, et un quatrième axe vertical 60A. Un deuxième élément viscoélastique 26A est associé à l'élément basculeur 56A.

Il est clair que les bielles d'actionnement 62, 64 peuvent être remplacées par des câbles travaillant en traction.

Le fonctionnement est identique à celui du système de suspension de la figure 1. Les deux éléments basculeurs 56, 56A sont interconnectés cinématiquement par les deux bielles d'actionnement 62, 64. La répartition entre les essieux avant et arrière des transferts de charge latéraux en virage est fonction des écartements avant et arrière des deux bielles d'actionnement 62, 64. Un dispositif de réglage (non représenté) permet d'ajuster à cet effet l'un des écartements, ou les deux à la fois.

En référence à la figure 3 qui est une variante de la figure 2, la liaison rigide entre les deux essieux s'effectue au moyen de quatre vérins 66, 68 ; 66A, 68A et une paire de canalisations hydrauliques 70, 72. L'élément basculeur 56, 56A de chaque essieu possède un degré de liberté en rotation autour de l'axe horizontal 74, 74A commun de deux vérins 66, 68 ; 66A, 68A alignés, et un degré de liberté en translation correspondant à la course transversale desdits vérins. Un compensateur hydraulique 76, 78 peut être connecté à chaque canalisation hydraulique 70, 72 pour pallier d'éventuelles fuites de liquide dans le circuit hydraulique. L'arbre 74, 74A est accouplé à ses extrémités opposées aux pistons 80, 82 ; 80A, 82A mobiles des deux vérins 66, 68; 66A; 68A correspondants.

Le mouvement de pompage est contrôlé par l'élément viscoélastique de suspension 26, 26A de chaque essieu grâce à la rotation de l'élément basculeur 56, 56A autour de l'axe horizontal 74, 74A correspondant. Les canalisations 70, 72 du circuit hydraulique interconnectent d'une part les volumes pistonnables des vérins 66, 66A situés d'un même côté du véhicule 84, et d'autre part ceux des vérins 68, 68A situés du côté latéral opposé. A titre d'exemple, en fonction de la réaction des bielles de commande 28, 30 du train avant, une translation vers la gauche de l'arbre 74 provoque une compression du fluide dans le vérin 66, et une augmentation de volume dans l'autre vérin 68 aligné. Cette variation différentielle de la pression hydraulique provoque une augmentation du volume pistonnable dans le vérin 66A, et une compression dans le vérin 68A opposé suite au déplacement en translation de l'arbre 74A du train arrière dans le sens inverse de celui 74 du train avant. Il en résulte que les roues situées d'un même côté se déplacent avec des mouvements opposés, tandis que les roues en diagonale ont des mouvements identiques par rapport à la masse suspendue du châssis.

La pression du fluide étant identique dans les vérins situés d'un même côté du véhicule, la répartition du transfert de charge latéral de la masse suspendue en virage est fonction des sections respectives des vérins avant et arrière.

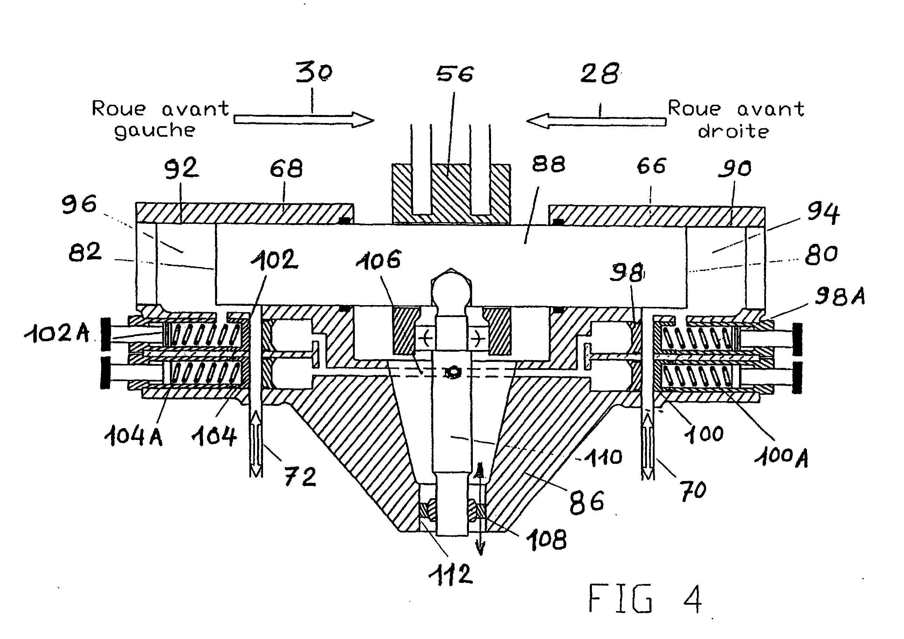

Sur la figure 4, l'élément basculeur 56 de l'essieu avant du véhicule 84 est logé dans la partie centrale d'un corps 86 métallique, et est susceptible d'actionner un piston 88 commun monté à étanchéité dans deux alvéoles 90, 92 cylindriques du corps 86 pour confiner les deux volumes pistonnables 94, 96 des vérins 66, 68. Les volumes pistonnables 94, 96 communiquent avec les canalisations 70, 72 du circuit hydraulique par l'intermédiaire de clapets 98, 100 ; 102, 104 de commande, susceptibles de se trouver chacun dans un état ouvert, ou dans un état fermé. Les clapets sont tarés par des ressorts 98A, 100A ; 102A, 104A, et se trouvent dans l'état ouvert en position normale de fonctionnement. La fermeture des différents clapets 98, 100, 102, 104 au niveau de l'essieu avant s'effectue dans les conditions extrêmes surventes ;

En cas de décollement d'une roue, par exemple celle de la roue avant gauche 20, la perte de contact avec le sol entraîne une montée en pression dans le volume pistonnable 94 et dans la canalisation 70. Il en résulte la fermeture du clapet 98 inhibant la liaison hydraulique avec le vérin 66A de la roue arrière droite 24.

En cas de décollement simultané des deux roues avant 18, 20, par exemple lors d'un franchissement d'un obstacle, la pression atteint un seuil minimum dans la canalisation 106 reliée au volume d'huile de l'élément viscoélastique, permettant la fermeture des clapets 100 et 104. La liaison hydraulique avec les deux vérins arrière 66A, 68A est interrompue, et il en résulte un blocage en rotation de l'essieu arrière.

Le réglage de la répartition des transferts de charge transversaux s'effectue mécaniquement par translation d'une rotule 108 agencée entre l'arbre 110 de l'élément basculeur 56 et l'orifice 112 circulaire du corps 86. Le rapport entre la force transversale s'appliquant sur l'élément basculeur 56, et la force transversale agissant sur le piston 88 des vérins 66, 68 est fonction de la position longitudinale de la rotule 108. L'ajustage de la rotule 108 peut être opéré de manière manuelle ou être asservi à des paramètres prédéterminés, notamment l'accélération longitudinale. Un seul système mécanique de réglage de répartition, à l'avant ou à l'arrière, est suffisant .

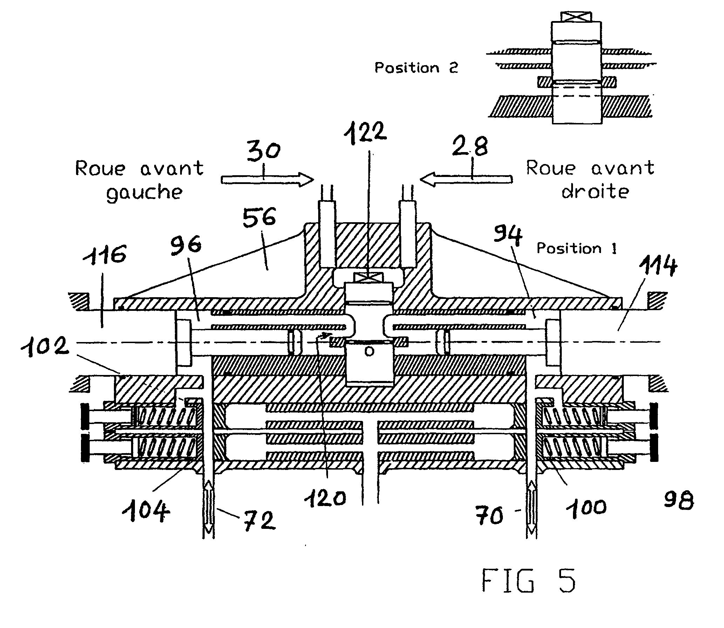

La figure 5 montre une variante de la figure 4 avec un système hydraulique de réglage de la répartition des transferts de charge transversaux en virage entre les essieux avant et arrière. Dans ce cas, les pistons 114, 116 des vérins sont fixes, et le cylindre 118 est mobile en translation en faisant partie de l'élément basculeur 56. Les deux volumes pistonnables 94, 96 en liaison avec les canalisations 70, 72 coopèrent dans la partie centrale avec un dispositif de distribution 120 à réglage du débit d'huile dans les canalisations 70, 72.

Trois différentes valeurs de réglage de la répartition des transferts de charge transversaux en virage peuvent être choisies :
- dans le cas de la position du tiroir de distribution illustrée à la figure 5 pour les deux essieux avant et arrière, la répartition des transferts de charge s'effectue d'une manière égale entre l'avant et l'arrière ;
- lorsque l'organe de réglage 122 du dispositif de distribution 120 de l'essieu avant est déplacé d'un quart de tour, le transfert de charge est plus important sur l'essieu arrière ;
- en cas de déplacement d'un quart de tour du dispositif de distribution 120 de l'essieu arrière, le transfert est plus important sur l'essieu avant.

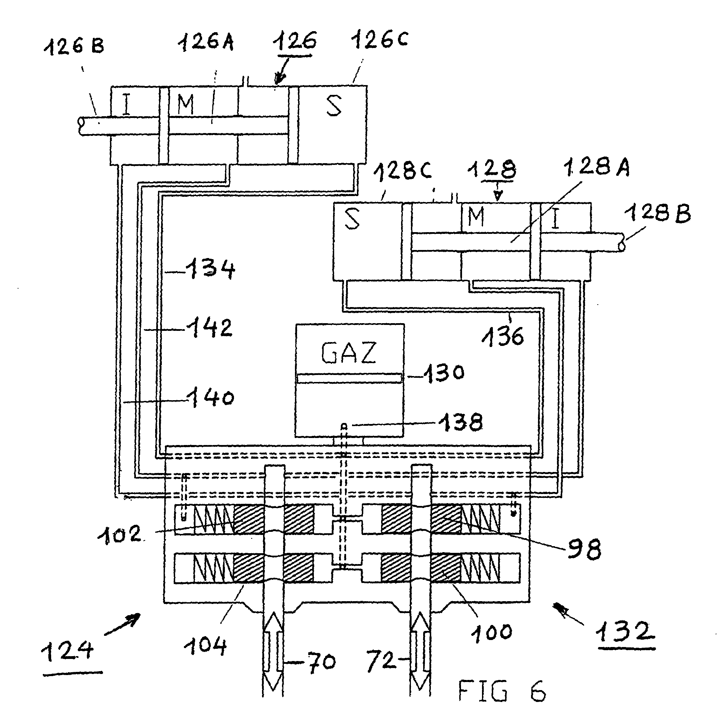

En référence à la figure 6 représentant l'application du principe de la figure 1 à un véhicule de tourisme, le dispositif hydraulique 124 de suspension associé à chaque essieu avant et arrière, comporte deux vérins hydrauliques 126, 128, un élément viscoélastique 130, et un boîtier de distribution 132 hydraulique.

Le boîtier de distribution 132 comporte quatre clapets 98, 100, 102, 104 du type décrit et représenté à ceux des figures 4 et 5, et les vérins 126, 128 sont reliés aux deux roues d'un essieu, par exemple l'essieu avant. L'essieu arrière est équipé du même dispositif hydraulique de suspension.

Chaque vérin 126, 128 est doté d'un double piston mobile 126A, 128A accouplé à une tige d'actionnement 126B, 128B, et délimitant trois chambres distinctes I, M, S à l'intérieur du cylindre fixe 126C, 128C. La répartition des transferts de charge transversaux entre les essieux avant et arrière est définie par le rapport des diamètres respectifs des vérins avant et arrière.

Les chambres S des deux vérins 126, 128 sont connectées par des tubulures 134, 136 à l'orifice de raccordement 138 hydraulique de l'élément viscoélastique 130. La chambre I du vérin avant gauche 126 est reliée par une tubulure 140 à la chambre intermédiaire M du vérin avant droit 128, à la chambre I du vérin arrière gauche, et à la chambre M du vérin arrière droit, respectivement par les canalisations 70, 72. La chambre M du vérin avant gauche 126 est branché par une tubulure 142 à la chambre I du vérin avant droit 128, à la chambre M du vérin arrière gauche, et à la chambre I du vérin arrière droit.

Une telle interconnexion des quatre vérins des deux essieux avant et arrière imposent des mouvements identiques à ceux décrits avec le schéma de principe de la figure 1.

Il est clair que le boîtier de distribution 132 à quatre clapets 98, 100, 102, 104 pourrait être remplacé par deux électrovannes asservies à des capteurs de mesure de la pression du fluide dans les chambres intermédiaires M des vérins de roues.

Selon un développement de l'invention, l'étude dynamique du système de suspension selon les figures 3 à 6, a démontré l'intérêt d'adjoindre à la deuxième liaison rigide connectant les deux essieux, un système élastique ou viscoélastique ayant une raideur prédéterminée. L'interaction de ce système élastique permet de mieux ajuster les réactions verticales du sol, et de contrôler le mouvement de roulis en cas d'un décollement de roue. La présence de cette raideur évite l'agencement des vannes hydrauliques décrites précédemment.

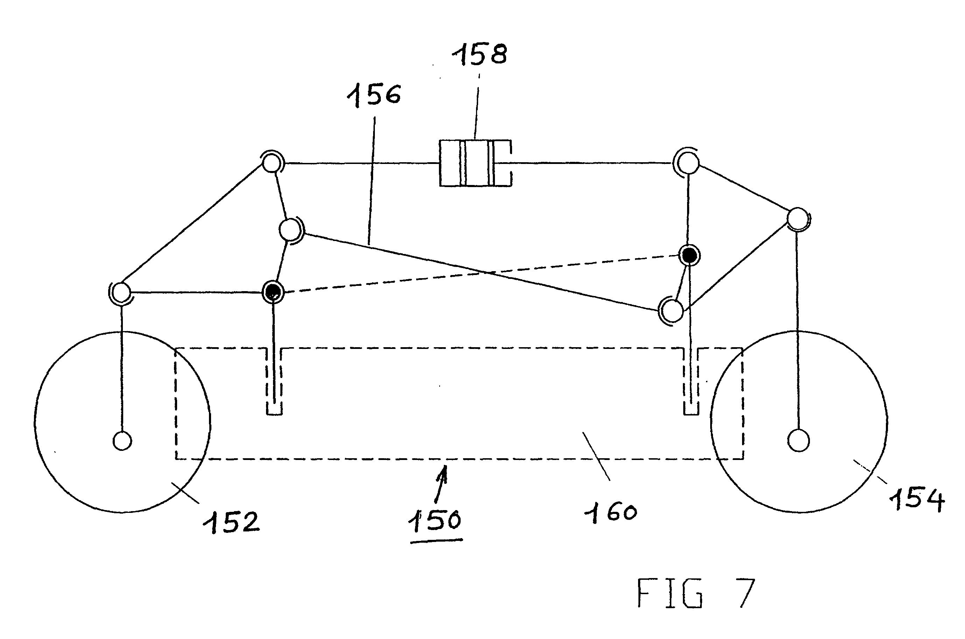

Sur la figure 7, le système schématisé sur la figure 2 correspond à un véhicule 150, auquel on a ajouté une liaison rigide 156 constituée par une bielle agencée entre les essieux avant et arrière. Un seul élément viscoélastique 158 assure dans ce cas la suspension du véhicule 150, et la bielle de liaison 156 s'oppose à tout mouvement de tangage du châssis 160.

## Revendications

1. Véhicule comportant :
- un châssis (12, 160) rigide associé à au moins un essieu avant (14) et un essieu arrière (16), chaque essieu étant équipé d'au moins deux roues ( 18, 20, 152; 22, 24, 154) disposées symétriquement par rapport à l'axe longitudinal du châssis, et chaque roue possédant un degré de liberté vertical par rapport au châssis,
- une première liaison (28,30,32,34) entre les roues ( 18, 20; 22, 24) d'un même essieu (14, 16), pour imposer aux roues dudit essieu des mouvements verticaux de pompage identiques par rapport au châssis, ou de mêmes amplitudes mais de sens opposés, ou des movements verticaux résultant de la combinaison des deux types de mouvements précédents,
- une deuxième liaison rigide entre l'essieu avant (14) et l'essieu arrière (16) coopérant avec la première liaison pour dériver du mouvement de rotation par rapport au châssis de l'un des essieux, un mouvement de rotation en sens inverse de l'autre essieu, ladite deuxième liaison étant agencée pour s'opposer au mouvement de roulis du châssis en situation de virage,
- et des premiers moyens pour ajuster la répartition entre les essieux avant (12) et arrière (14) du transfert de charge transversal dû à l'accélération transversale,
**caractérisé en ce que** :
- la première liaison est rigide entre les roues de chaque essieu ( 12, 14),
- la deuxième liaison rigide entre l'essieu avant (14) et l'essieu arrière (16) est hydraulique, et comprend deux canalisations (70, 72) en liaison avec des vérins associés aux roues des deux essieux ( 12, 14) de manière à déplacer les roues situées d'un même côté selon des mouvements de sens opposés, tandis que les roues disposées en diagonale possèdent des mouvements de sens identiques par rapport au châssis (12),
- chaque essieu (12, 14) comprenant de plus des deuxièmes moyens (56,56A) pour autoriser un premier mouvement vertical de pompage, et un deuxième mouvement différentiel permettant la répartition des transferts de charge latéraux en virage entre les deux essieux.

2. Véhicule selon la revendication 1, **caractérisé en ce que** les deuxièmes moyens sont formés dans chaque essieu (12, 14) par un élément basculeur (56, 56a) ayant deux degrés de liberté par rapport au châssis (12), et coopèrant avec une paire de vérins (66, 68; 66A, 68A) hydrauliques alignés dans le sens transversal de chaque essieu, les vérins avant et arrière situés d'un même côté du véhicule (84) étant interconnectés au moyen de l'une des canalisations hydrauliques (70, 72) permettant une variation différentielle des volumes pistonnables.

3. Véhicule selon la revendication 2, **caractérisé en ce que** les volumes pistonnables (94, 96) des vérins (66, 68) de chaque essieu communiquent avec les canalisations (70, 72) par des clapets (98, 100 ; 102, 104) se trouvant soit dans un état ouvert lors du fonctionnement normal du système de suspension , soit dans un état fermé en cas de perte de contact avec le sol d'au moins une roue de l'essieu correspondant, et que l'élément basculeur (56, 56A) est équipé d'un système mécanique ou hydraulique de réglage (108, 122) de la répartition des transferts de charge transversaux.

4. Véhicule selon la revendication 1, **caractérisé en ce que** les deuxièmes moyens sont formés dans chaque essieu (12, 14) par un dispositif hydraulique (124) de suspension ayant deux vérins hydrauliques (126, 128), un élément viscoélastique (130), et un boîtier de distribution (132) relié aux deux canalisations hydrauliques (70, 72) d'interconnexion avec l'essieu arrière.

5. Véhicule selon la revendication 4, **caractérisé en ce que** :
- chaque vérin hydraulique (126, 128) comprend un double piston mobile (126A, 128A) délimitant trois chambres distinctes (I, M, S) à l'intérieur d'un cylindre fixe (126C, 128C), l'une des chambres (S) du vérin (126) étant connectée à la chambre correspondante (S) de l'autre vérin (128) par une première tubulure (134), tandis que les deux autres chambres (M, I) du vérin (126) sont reliées en inverse aux chambres (I, M) de l'autre vérin (128) par des deuxième et troisième tubulures (142, 140),
- les tubulures (134, 140, 142) sont interconnectées avec le boîtier de distribution (132) pour que d'une part la chambre (I) du vérin avant gauche soit reliée de plus à la chambre (I) du vérin arrière gauche, et à la chambre (M) du vérin arrière droit par des canalisations (70, 72), et que d'autre part la chambre (M) du vérin avant gauche soit branchée de plus à la chambre (M) du vérin arrière gauche , et à la chambre (I) du vérin arrière droit.

6. Véhicule selon la revendication 1, **caractérisé en ce qu'**une liaison supplémentaire (156) est disposée entre l'essieu avant (12) et l'essieu arrière (14) pour dériver du mouvement de pompage d'un essieu, un mouvement de pompage de même sens de l'autre essieu.

## Patentansprüche

1. Ein Fahrzeug, das folgendes umfasst :
- ein starres Fahrgestell (12, 160), das mindestens einer Vorderachse (14) und einer Hinterachse (16) zugeordnet ist, wobei jede Achse mit mindestens zwei Rädern ausgestattet ist (18, 20 152; 22, 24, 154), die symmetrisch bezüglich der Längsachse des Fahrgestells angeordnet sind, und wobei jedes Rad einen Freiheitsgrad besitzt, der vertikal zum Fahrgestell ausgerichtet ist,
- eine erste Verbindung (28, 30, 32, 34) zwischen den Rädern (18, 20 ; 22, 24) einer selben Achse (14, 16), um den Rädern der genannten Achse identische vertikale Pumpbewegungen in Bezug auf das Fahrgestell vorzuschreiben, oder Bewegungen mit denselben Amplituden aber entgegengesetzter Richtung, oder vertikale Bewegungen, die aus der Kombination der beiden vorhergehenden Arten von Bewegungen hervorgehen,
- eine zweite Verbindung, die starr zwischen der Vorderachse (14) und der Hinterachse (16) angeordnet ist, die mit der ersten Verbindung zusammenwirkt, um von der Drehbewegung der einen Achse relativ zum Fahrgestell eine Drehbewegung im Gegensinn der anderen Achse herzuleiten, wobei die genannte zweite Verbindung so angeordnet ist, dass sie sich dem Schwanken des Fahrgestells in Kurvensituationen entgegensetzt,
- erste Mittel zum Anpassen der Verteilung der transversalen Lastübertragung, der durch die transversale Beschleunigung hervorgerufen wird, zwischen den Vorderachsen (12) und den Hinterachsen (14),
**dadurch gekennzeichnet, dass**
- die erste Verbindung starr zwischen den Rädern von jeder Achse (12, 14) ist,
- die zweite starre Verbindung zwischen der Vorderachse (14) und der Hinterachse (16) hydraulisch ist und zwei Kanalisationen (70, 72) umfasst, die in Verbindung mit den Rädern der beiden Achsen (12, 14) zugeordneten Zylinder-Kolben-Einheiten stehen, so dass die Räder, die auf einer selben Seiten angeordnet sind, gemäss der Bewegungen im Gegensinn versetzt werden, wobei die Räder, die diagonal angeordnet sind, Bewegungen aufweisen, die identisch relativ zum Fahrgestell (12) verlaufen,
- jede Achse (12, 14) zweite Mittel (56, 56A) umfasst, die eine erste vertikale Pumpbewegung erlauben und eine zweite Differentialbewegung, die die Verteilung der transversalen Lastübertragung zwischen den beiden Achsen in Kurven erlauben.

2. Fahrzeug nach Anspruch 1, **dadurch gekennzeichnet, dass** die zweiten Mittel in jeder Achse (12, 14) durch ein Kippelement gebildet werden (56, 56A), das zwei Freiheitsgrade relativ zum Fahrgestell (12) hat und mit einem Paar von hydraulischen Zylinder-Kolben-Einheiten (66, 68 ; 66A, 68A) zusammenwirkt, die in der Querrichtung jeder Achse ausgerichtet sind, wobei die Zylinder-Kolben-Einheiten, die sich hinten und vorne auf derselben Seite des Fahrzeugs (84) befinden, durch eine der Kanalisationen (70, 72) verbunden sind, so dass eine differentielle Veränderung der Hubvolumen ermöglicht wird.

3. Fahrzeug nach Anspruch 2, **dadurch gekennzeichnet, dass** die Hubvolumen (94, 96) der Zylinder-Kolben-Einheiten (66, 68) jeder Achse mit den Kanalisationen (70, 72) durch Klappen (98, 100 ;102, 104) kommunizieren, die sich entweder in einem offenen Zustand während der normalen Funktionsweise des Aufhängungssystems befindet, oder in einem geschlossenen Zustand im Falle eines Bodenhaftungsverlustes von mindestens einem Rad der entsprechenden Achse, und dass das Kippelement (56, 56A) mit einem mechanischen oder hydraulischen System (108, 122) zur Regelung der Verteilung der transversalen Lastübertragung aufgestattet ist.

4. Fahrzeug nach Anspruch 1, **dadurch gekennzeichnet, dass** die zweiten Mittel in jeder Achse (12, 14) durch eine hydraulische Aufhängungsvorrichtung (124) gebildet werden, die zwei hydraulische Zylinder-Kolben-Einheiten (126, 128), ein visko-elastisches Element (130) und einen Verteilerkasten (132) hat, der mit den zwei hydraulischen Verbindungskanalisationen (70, 72) mit der Hinterachse verbunden ist.

5. Fahrzeug nach Anspruch 4, **dadurch gekennzeichnet, dass**
- jede Zylinder-Kolben-Einheit (126, 128) einen beweglichen Doppelkolben (126A, 128A) umfasst, wodurch drei getrennte Kammern (I, M, S) im innern eines festen Zylinders (126C, 128C) abgegrenzt werden, wobei eine der Kammern (S) der Zylinder-Kolben-Einheit (126) mit der entsprechenden Kammer (S) der anderen Zylinder-Kolben-Einheit (128) durch ein erstes Röhrchen (134) verbunden ist, während die anderen beiden Kammern (M, I) der Zylinder-Kolben-Einheit (126) umgekehrt mit den Kammern (I, M) der anderen Zylinder-Kolben-Einheit (128) durch ein zweites und ein drittes Röhrchen (142, 140) verbunden sind,
- die Röhrchen (134, 140, 142) mit dem Verteilerkasten (132) verbunden sind, damit einerseits die Kammer (I) der Zylinder-Kolben-Einheit vorne links zudem mit der Kammer (I) der Zylinder-Kolben-Einheit hinten links verbunden ist und mit der Kammer (M) der Zylinder-Kolben-Einheit hinten rechts durch die Kanalisationen (70, 72), und andererseits die Kammer (M) der Zylinder-Kolben-Einheit vorne links zudem mit der Kammer (M) der Zylinder-Kolben-Einheit hinten links verbunden ist und mit der Kammer (I) der Zylinder-Kolben-Einheit hinten rechts.

6. Fahrzeug nach Anspruch 1, **dadurch gekennzeichnet, dass** eine zusätzliche Verbindung (156) zwischen der Vorderachse (12) und der Hinterachse (14) angeordnet ist, um von der Pumpbewegung einer Achse eine Pumpbewegung der anderen Achse in derselben Richtung herzuleiten.

## Claims

1. Vehicle comprising:
- a rigid frame (12, 160) associated to at least one front axle (14) and one rear axle (16), each axle being equipped with at least two wheels (18, 20, 152; 22, 24, 154) arranged symmetrically relative to the longitudinal axe of the frame and each wheel having one degree of freedom relative to the frame,
- a first linkage (28, 30, 32, 34) between the wheels (18, 20; 22, 24) of one same axle (14, 16) in order to impose identical vertical pumping movements relative to the frame to the wheels of said axle, or movements with equal amplitudes but opposite directions or vertical movements resulting from combinations of the two preceding types of motion,
- a second rigid linkage between the front axle (14) and the rear axle (16) co-operating with the first linkage in order to derive from the rotating movement of one of the axles relative to the frame, an inverse rotating movement of the other axle, the said second linkage being arranged to counter the rolling motion of the frame when turning round a bend,
- and first means for adjusting the distribution between the front (12) and the
rear axles (14) of the load transfer resulting from lateral acceleration,
wherein
- the first linkage is rigid between the wheels of each axle (12, 14),
- the second rigid linkage between the front axle (14) and the rear axle (16) is hydraulic and comprises two canalisations (70, 72) linked with jacks associated with the wheels of both axles (12, 14) so as shift the wheels situated on the same side corresponding to movements in opposite directions, whereas the wheels arranged diagonally have movements of the identical direction relative to the frame (12),
- each axle (12, 14) comprises further second means (56, 56A) to enable a first vertical pumping movement and a second differential movement allowing the distribution of the lateral load transfers between both axles in a bend.

2. Vehicle according to claim 1, wherein the second means are formed in each axle (12, 14) by a tilting element (56, 56A) with two degrees of freedom relative to the frame (12) and co-operating with a pair of hydraulic jacks (66, 68, 66A, 68A), oriented in the transversal direction of each axle, the front and rear jacks on the same side of the vehicle (84) being interconnected by one of the hydraulic canalisations (70, 72) allowing a differential variation of the working volumes of the jacks.

3. Vehicle according to claim 2, wherein the working volumes (94, 96) of the jacks (66, 68) of each axle communicate with the canalisations (70, 72) with valves (98, 100; 102,104) which are either in an open state during the normal working of the suspension system or in a closed state in the case when at least one wheel of the corresponding axle looses ground contact and wherein the tilting element (56, 56A) is equipped with a mechanical or hydraulic system for adjustment (108, 122) of the distribution of transversal load transfers.

4. Vehicle according to claim 1, wherein the second means are formed in each axle (12, 14) by a hydraulic suspension device (124) with two hydraulic jacks (126, 128), a visco-elastic element (130) and a distribution housing (132) connected with both hydraulic interconnection canalisations (70, 72) with the rear axle.

5. Vehicle according to claim 4, wherein
- each hydraulic jack (126, 128) comprises a mobile double piston (126A, 128A) delimiting three different chambers (I, M, S) inside a fixed cylinder (126C, 128C), one of the chambers (S) of the jack (126) being connected to the corresponding chamber (S) of the other jack (128) by a first small tube (134), while both other chambers (M,I) of the jack (126) are connected inversely to the chambers (I,M) of the other jack by second and third small tubes (142, 140),
- the small tubes (134, 140, 142) are interconnected with the distribution housing (132) so as to connect on the one hand the chamber (I) of the left front jack further with the chamber (I) of the left rear jack and the chamber (M) of the right rear jack by the canalisations (70, 72) and on the other hand the chamber (M) of the left front jack further with the chamber (M) of the left rear jack and the chamber (I) of the right rear jack.

6. Vehicle according to claim 1, wherein an additional linkage (156) is arranged between the front axle (12) and the rear axle (.14) so as to derive from the pumping movement of one of the axles an pumping movement of the other axle in the same direction.
